# EUROPEAN PATENT SPECIFICATION

(11) **EP 1 365 641 B1**
(45) Date of publication and mention of the grant of the patent: **14.09.2005**
(21) Application number: 02703992.4
(22) Date of filing: 28.02.2002
(51) Int. Cl.: A01G 9/10

(54) **CULTURE MEDIUM**
ZUCHTMITTEL
MILIEU DE CULTURE

(30) Priority: 28.02.2001 NL 1017460
(43) Date of publication of application: 03.12.2003
(73) Proprietor: Green Products B.V., 8263 AC Kampen (NL)
(72) Inventor: LANGEZAAL, Lucas, Everhardus, Maria, NL-3818 WE Amersfoort (NL)
(74) Representative: Kupecz, Arpad
(86) International application number: PCT/NL2002/000134
(87) International publication number: WO 2002/076187

(56) References cited:
- EP-A- 1 099 368
- EP-B- 0 209 790
- GB-A- 1 165 123
- US-A- 3 472 644
- US-A- 3 979 198
- US-A- 4 977 192
- DATABASE WPI Section Ch, Week 199813 Derwent Publications Ltd., London, GB; Class A23, AN 1998-138082 XP002179886 & JP 10 014408 A (TOKAI KASEI KK), 20 January 1998 (1998-01-20)
- DATABASE WPI Section Ch, Week 199336 Derwent Publications Ltd., London, GB; Class A23, AN 1993-284644 XP002179887 & JP 05 199818 A (NIPPON KAYAKU KK), 10 August 1993 (1993-08-10)

## Description

The present invention relates to a culture medium that is suitable for growing plants, and which comprises a filler and a polymer. The invention also relates to a method for the production of such a culture medium. The invention also relates to a container for a culture medium according to the invention.

A culture medium as mentioned in the preamble is known in the art. US 3,472,644, to Woodside et al, describes a culture medium which comprises a polymer and a filler. Said document mentiones that the polymer should have an excellent resistance to oxidation, bacteria and fungus. Then, according to US 3,472,644, the polymer will remain intact during long times. As an example of especially preferred suitable polymers, polyurethane is mentioned.

EP 0.209.709 to Bayer AG describes a culture medium wherein foamed polymer particles are used as a filler. Here also, said filler preferably is comprised of polyurethane.

JP 10.014408-A, to Tokai Kasei KK, describes a biodegradable culture medium, which consists of mixed starting materials.

The culture media as known from the above identified publications are to some extent solid, that is to say that they have a structure so as to allow a plant to grow roots therein. However, the media as known from the publications cited above hinder the roots from growing properly. Furthermore, the media known from US 3,472,644 and EP 0.209.790 are not biologically degradable.

The object is to alleviate the above mentioned problems. A particular object is to provide a culture medium that is completely biologically degradable and that does not impede the plant's growth.

According to the invention the above mentioned problems are solved by the fact that the culture medium as mentioned in the preamble is comprised of a foamed polymerised mixture of a biologically degradable polymerisable medium and the filler. In this way the filler, which serves as culture bed is contained by the polymer matrix, thereby providing a very coherent composition during the growing period. The foamed polymerized mixture provides an open structure in the polymer matrix, which provides a still improved environment for growing roots. After use the medium can be re-used as biological material.

So as to obtain said foamed polymer, a foaming agent is added to the mixture to provide an open structure in the polymer matrix. The foamed structure improves the absorption and retention of water in the mixture, which may be improved further by adding a wetting agent.

According to a preferred embodiment, the culture medium comprises 1 - 90 % by vol. of polymer, 2 - 98 % by vol. of filler, 1 - 80 % by vol. of foaming agent and optionally 0.001 - 20 % by vol. of wetting agent. This provides a widely applicable range of suitable culture medium.

According to a further embodiment the culture medium according to the invention may be used in the form of a granulate. In that case the culture medium may be used as soil improvement agent. To this end it may optionally be mixed in with other substrates to obtain desirable characteristics and to be passed on to the soil.

For growing plants, the culture medium may be put into containers. Such containers comprise a plurality of hollows into which a quantity of medium may be put. For example, the medium may have a form and size so as to exactly fill a hollow. Such plugs may, for example, be cylindrical. Common diameters are 13 mm, 20 mm, 28 mm, 40 mm and 50 mm. The length is variable.

It is also possible to embody the culture medium as a mat, allowing several plants to grow in the culture medium.

By mixing the biologically degradable polymers, the foaming agents (e.g. thermic leavening agents), the fillers and optionally the thickening agents, and the surfactant (wetting agents) in a specific mixing ratics in an extruder, the influence of temperature and a limited amount of water, will yield a mixture, which when leaving the extruder will provide a foamed substrate. Depending on the mixing ratios of the components, the foam effect obtained in the substrate will be more or less, and depending on the outflow diameter of the extruder and the pressure in the extruder, either a thick or thin substrate strand will be produced. The amounts required for a particular final product may be determined by trial.

The biologically degradable polymer may be any known polymer not producing harmful substances during decomposition. A choice may be made from, for example:
1) biologically degradable polyesters such as statistic, aliphatic-aromatic copolyesters that are based on the different monomers of butanediol, adipic acid and terephthalic acid;
2) polylactic acid compounds, among which the A and the D variant;
3) polyhydroxybutyrate (PHB) compounds and polyhydroxyalkanoate (PHA) compounds; and
4) the starch compounds.

For example, and preferably, a biologically degradable polymer of synthetic origin or a biologically degradable polymer of renewable origin (of the group 2, 3 and 4 above, for example biopolymer) may be used. The above mentioned polymers, separately or combined with each other, may give the foam result mentioned. By means of varying the combinations it is possible to regulate for example the degradation time, the ability to absorb water and the hardness of the substrate.

The filler may be chosen from substances known in the art such as for example peat, compost, clay, soil, coconut fibres, coconut granulate, hemp fibres, grass fibres, straw, sawdust, coffee dregs, residue from the cattle feed industry or from the paper industry.

The method for the production of the culture medium comprises mixing together a polymerisable agent, a foaming agent and a filler, wherein according to the invention the polymerisable agent is chosen from substances that after polymerisation produce a biologically degradable polymer and in that after mixing, the polymerisable agent is foamed and polymerised. In this way a culture medium is obtained in which the filler is distributed through the polymer mould. Said foaming agent is added to endow the culture medium with improved characteristics, as mentioned above.

The foaming process may be enhanced by the addition of a leavening agent, for example, a thermic leavening agent such as bicarbonate.

The type of polymer and the amount as well as the mixing ratio of the bio polymers and synthetic polymers, as well as the type and the amount of filler, determine together with the type and the amount of foaming agent, not only the degree of foaming but also other specific characteristics, such as the absorption of water and the rate of biological degradation. Thus this rate of degradation can be regulated and can be adapted for each desired culture application.

The rate of the substrate's absorption of water may be influenced by the addition of a surfactant such as a generally known wetting agent. Larger quantities of this agent will increase the rate of the substrate's water absorption.

The container for the culture medium as mentioned above is produced, in accordance with the invention, from a biologically degradable polymer. This may be produced in the same manner as the culture medium. The substrate is directly injected (warm or cold) from the extruder into a mould after which the mould is pressed. It preferably also comprises a foaming agent and an organic filler. According to a particular preferred embodiment, the container is produced by using a preferably biologically degradable, water-repellent agent (hydrophobic agent, such as organo-modified siloxanes) in the mixture. For example, the biologically degradable polymer may be an at least partly water repellent polymer. In this way the container will not absorb water. Ingrowth of roots will to a certain extent be prevented. According to a further preferred embodiment, the container has a closed structure, for example, surface structure, such that it is not possible for the roots to grow into it.

Under the influence of temperature, moisture and organisms in the soil, the polymer is degraded into the end products CO₂ and H₂O, and biomass. The degradation products must not contain any components that are harmful to plants.

The filler may be any substance known in the art in the form of granules, fibres or powder that is organic and not harmful to the environment. In particular said substance may not contain any components that are harmful to the plants to be grown.

In general, the method for producing the culture medium is carried out in an extruder. The various substances may be mixed in the extruder or may have already been mixed outside the extruder. Friction and the elevated pressure in the extruder create heat. As a result of the elevated temperature of the mixture polymerisation and foaming are started. By keeping the temperature above 100°C during production a sterile product is obtained. By cooling the formed extruded product a product retaining its shape in the form of a strand is obtained that may be shortened at a later stage or immediately after ejection from the extruder.

If a container according to the invention is produced, at least the biologically degradable polymer is mixed with the filler and polymerised. Optionally a foaming agent and a water-resistant agent may be added. The quantities and the ratios of the various starting materials are determined by the characteristics the container is desired to have. In general, the container should have a structure such as to prevent the ingrowth of roots. It is generally also preferred that the container is at least partly water repellent. In this way the container will retain a sufficiently firm consistency during use. If a foaming agent is added, it will generally be in a relatively limited amount in order to restrict the porosity. The container preferably has a closed surface structure.

If a container is to be used once only, the container may be cut up after the plants have been raised, and used as general soil improvement agent. If the container had a closed surface structure, cutting up will expose the open structure so as to allow biological degradation to take place more quickly.

As foaming agent the known biologically acceptable foaming agents may be used, such as water and sodium bicarbonate. Other foaming agents or methods, such as direct gas injection are of course also possible.

The quantities may be varied, depending on the characteristics the culture medium to be produced is desired to have. If little foaming activity is desired, only a small amount of foaming agent is used. If rapid biodegradability is desired, the amount of polymer may be reduced or another type of polymer or another mixture may be used, whilst of course the culture medium must retain an adequate consistency. The amount of filler may also be adjusted as desired.

The culture medium according to the invention is extremely suitable for use as growth medium or as medium for cuttings, suitable for putting in seeds or cuttings.

It is also very suitable as growth medium wherein young plants are transplanted into a large-volume substrate, to be raised to mature plants.

The culture medium is also very suitable for use as production medium, wherein it is present in the form of a substrate mat, the plants being used as production plant for the harvest of fruit or flowers.

It is also suitable as soil improvement agent, wherein the culture medium according to the invention, preferably in the form of granulates or granules option ally is mixed with other substances to afford better growth conditions.

In the solid form, for example cylindrical, cubic, rectangular, oblong, the culture medium may be used in corresponding hollows in suitable containers provided for the purpose.

As already mentioned, the containers according to the invention may be conveniently used for growing plants and germinating seeds. The containers may also be used for inserting and holding flowers or other parts of plants in bouquets, flower arrangements, Christmas bouquets, etc.

## Claims

1. A culture medium suitable for growing plants, comprising a filler and a polymer, **characterised in that** it is comprised of a foamed polymerised mixture of a biologically degradable polymer and the filler.

2. A culture medium according to claim 1, **characterised in that** it comprises 1 - 90 % by vol. of polymer, 2 - 98 % by vol. of filler, 1 - 80 % by vol. of foaming agent and optionally 0.001 - 20 % by vol. of surfactant; and preferably 2 - 25 % by vol. of polymer, 30 - 75 % by vol. of filler, 15 - 60 % by vol. of foaming agent and optionally 0.001 - 10 % by vol. of surfactant.

3. A culture medium according tc one of the preceding claims, **characterised in that** it comprises a plant or seed to be cultured.

4. A culture medium according to one of the preceding claims, **characterised in that** it is a granulate.

5. A culture medium according to one of the preceding claims, **characterised in that** in addition it comprises 50 - 95 % by vol. of water, preferably 55 - 85 % by vol., and more preferably 65 - 80 % by vol.

6. A culture medium according to one of the preceding claims, **characterised in that** the biologically degradable polymer is chosen from at least one of:
1) biologically degradable polyesters such as statistic, aliphatic-aromatic copolyesters that are based on the different monomers of butanediol, adipic acid and terephthalic acid;
2) polylactic acid compounds, among which the A and the D variant;
3) polyhydroxybutyrate (PHB) compounds and polyhydroxyalkanoate (PHA) compounds; and
4) the starch compounds.

7. A culture medium according to one of the preceding claims, **characterised in that** the filler is chosen from organic material, chosen from for example peat, compost, clay, soil, coconut fibres, coconut granulate, hemp fibres, grass fibres, straw, sawdust, coffee dregs, residue from the cattle feed industry or from the paper industry.

8. A method for the production of a culture medium according to any of claims 1-7, comprising mixing together a polymerisable agent, a foaming agent and a filler, **characterised in that** the polymerisable agent is chosen from substances that after polymerisation produce a biologically degradable polymer and **in that** after mixing, the polymerisable agent is foamed and polymerised.

9. A method according to claim 8, **characterised in that** a foaming agent in an amount of 15 - 60 % by vol. is mixed together with the polymerisable agent in an amount of 2 - 25 % by vol., and the filler in an amount of 30 - 75 % by vol..

10. A container for a culture medium according to one of the preceding claims 1-7, **characterised in that** the same is produced from a biologically degradable polymer.

11. A container according to claim 10, **characterised in that** it comprises a preferably biologically degradable foaming agent and a polymerisable agent in an amount of 1 - 90 % by vol., optionally combined with an organic filler.

12. A container according to claim 10 or 11, **characterised in that** it comprises a biologically degradable water repellent agent.

13. A container according to claim 10, 11 or 12, **characterised in that** it has a structure such as to prevent roots from growing into it.

## Patentansprüche

1. Kulturmedium zum Züchten von Pflanzen mit einem Füllstoff und einem Polymer, **dadurch gekennzeichnet, dass** es aus einer geschäumten polymerisierten Mischung eines biologisch abbaubaren Polymers und des Füllstoffs besteht.

2. Kulturmedium nach Anspruch 1, **dadurch gekennzeichnet, dass** es 1-90 Vol.-% Polymer, 2-98 Vol.-% Füllstoff, 1-80 Vol.-% Schaumbildner und optional 0.001-20 Vol.-% eines Tensids aufweist; und vorzugsweise 2-25 Vol.-% Polymer, 30-75 Vol.-% Füllstoff, 15-60 Vol.-% Schaumbildner und optional 0.001-10 Vol.-% eines Tensids.

3. Kulturmedium nach einem der vorangehenden Ansprüche, **dadurch gekennzeichnet, dass** es eine Pflanze oder einen Samen aufweist, der gezüchtet werden soll.

4. Kulturmedium nach einem der vorangehenden Ansprüche, **dadurch gekennzeichnet, dass** es ein Granulat ist.

5. Kulturmedium nach einem der vorangehenden Ansprüche, **dadurch gekennzeichnet, dass** es zusätzlich 50-95 Vol.-%, vorzugsweise 55-85 Vol.-%, und mehr bevorzugt 65-80 Vol.-% Wasser aufweist.

6. Kulturmedium nach einem der vorangehenden Ansprüche, **dadurch gekennzeichnet, dass** das biologisch abbaubare Polymer als wenigstens eines aus den folgenden ausgewählt wird:
1) biologisch abbaubare Polyester wie statistische, fetthaltig-aromatische Copolyester, die auf den verschiedenen Monomeren von Butandiol, Adipinsäure und Terephthalsäure basieren;
2) polylaktische Säureverbindungen, unter diesen die A- und die D-Variante;
3) Polyhydroxybutyrat (PHB)-Verbindungen und Polyhydroxyalkanoat (PHA)-Verbindungen; und
4) die Stärkeverbindungen.

7. Kulturmedium nach einem der vorangehenden Ansprüche, **dadurch gekennzeichnet, dass** der Füllstoff aus organischem Material ausgewählt wird, beispielsweise aus der Auswahl Torf, Kompost, Ton, Erde, Kokosnussfasern, Kokosnussgranulat, Hanffasern, Grasfasern, Stroh, Sägemehl, Kaffeesatz, Reste der Katzenfutterindustrie oder der Papierindustrie.

8. Verfahren zur Herstellung eines Kulturmediums nach einem der Ansprüche 1 bis 7 mit folgenden Schritten: Vermischen eines polymerisierbaren Mittels, eines Schaumbildners und eines Füllstoffs, **dadurch gekennzeichnet, dass** das polymerisierbare Mittel aus Substanzen ausgewählt wird, die nach der Polymerisation ein biologisch abbaubares Polymer erzeugen, und dadurch, dass nach dem Vermischen das polymerisierbare Mittel aufgeschäumt und polymerisiert wird.

9. Verfahren nach Anspruch 8, **dadurch gekennzeichnet, dass** ein Schaumbildner in einer Menge von 15-60 Vol.-% zusammen mit dem polymerisierbaren Mittel in einer Menge von 2-25 Vol.-% und dem Füller in einer Menge von 30-75 Vol.-% vermischt wird.

10. Behälter für ein Kulturmedium nach einem der vorangehenden Ansprüche 1 bis 7, **dadurch gekennzeichnet, dass** selbiger aus einem biologisch abbaubaren Polymer hergestellt wird.

11. Behälter nach Anspruch 10, **dadurch gekennzeichnet, dass** er einen vorzugsweise biologisch abbaubaren Schaumbildner und ein polymerisierbares Mittel in einer Menge von 1-90 Vol.-%, optional kombiniert mit einem organischen Füllstoff, aufweist.

12. Behälter nach Anspruch 10 oder 11, **dadurch gekennzeichnet, dass** er ein biologisch abbaubares wasserabweisendes Mittel aufweist.

13. Behälter nach Anspruch 10, 11 oder 12, **dadurch gekennzeichnet, dass** er eine Struktur besitzt, die verhindert, dass Wurzeln hineinwachsen.

## Revendications

1. Milieu de culture adapté aux plantes en croissance, comprenant une matière de charge et un polymère, **caractérisé par le fait qu'**il comprend un mélange polymérisé transformé en mousse d'un polymère biologiquement dégradable et de la matière de charge.

2. Milieu de culture selon la revendication 1, **caractérisé par le fait qu'**il comprend de 1 à 90 % en volume de polymère, de 2 à 98 % en volume de matière de charge, de 1 à 80 % en volume d'agent moussant et éventuellement de 0,001 à 20 % en volume de tensioactif, et préférentiellement de 2 à 25 % en volume de polymère, de 30 à 75 % en volume de matière de charge, de 15 à 60 % en volume d'agent moussant et éventuellement de 0,001 à 10 % en volume de tensioactif.

3. Milieu de culture selon l'une des précédentes revendications, **caractérisé par le fait qu'**il comprend une plante ou une graine à cultiver.

4. Milieu de culture selon l'une des précédentes revendications, **caractérisé par le fait qu'**il s'agit de granulés.

5. Milieu de culture selon l'une des précédentes revendications, **caractérisé par le fait qu'**il comprend en outre de 50 à 95 % en volume d'eau, préférentiellement de 55 à 85 % en volume et plus préférentiellement de 65 à 80 % en volume.

6. Milieu de culture selon l'une des précédentes revendications, **caractérisé par le fait que** le polymère biologiquement dégradable est choisi parmi au moins l'un des :
1) polyesters biologiquement dégradables tels que les copolyesters aliphatiques-aromatiques statistiques qui reposent sur les différents monomères de butanediol, d'acide adipique et d'acide téréphtalique ;
2) composés de l'acide polylactique, parmi lesquels les variantes A et D ;
3) composés du polyhydroxybutyrate (PHB) et composés du polyhydroxyalcanoate (PHA) ; et
4) composés de l'amidon.

7. Milieu de culture selon l'une des précédentes revendications, **caractérisé par le fait que** la matière de charge est choisie parmi des matières organiques, choisie par exemple parmi la tourbe, le compost, l'argile, la terre, les fibres de coco, les granulés de coco, les fibres de chanvre, les fibres de verre, la paille, la sciure, le mare de café, les résidus de l'industrie de l'aliment pour le bétail ou de l'industrie du papier.

8. Procédé de production d'un milieu de culture selon l'une quelconque des revendications 1 à 7, comprenant le mélange d'un agent polymérisable, d'un agent moussant et d'une matière de charge, **caractérisé par le fait que** l'agent polymérisable est choisi parmi des substances qui, après polymérisation, produisent un polymère biologiquement dégradable, et **par le fait qu'**après mélange, l'agent polymérisable est transformé en mousse et polymérisé.

9. Procédé selon la revendication 8, **caractérisé par le fait qu'**un agent moussant dans une quantité de 15 à 60 % en volume est mélangé avec l'agent polymérisable dans une quantité de 2 à 25 % en volume et la matière de charge dans une quantité de 30 à 75 % en volume.

10. Récipient pour un milieu de culture selon l'une des précédentes revendications 1 à 7, **caractérisé par le fait que** celui-ci est produit à partir d'un polymère biologiquement dégradable.

11. Récipient selon la revendication 10, **caractérisé par le fait qu'**il comprend un agent moussant préférentiellement biologiquement dégradable et un agent polymérisable dans une quantité de 1 à 90 % en volume, éventuellement combiné avec une matière de charge organique.

12. Récipient selon la revendication 10 ou 11, **caractérisé par le fait qu'**il comprend un agent hydrofuge biologiquement dégradable.

13. Récipient selon la revendication 10, 11 ou 12, **caractérisé par le fait qu'**il possède une structure permettant d'empêcher les racines de se développer à l'intérieur.
